# NEUE EUROPÄISCHE PATENTSCHRIFT

(11) **EP 2 684 725 B2**
(45) Veröffentlichungstag und Bekanntmachung des Hinweises auf die Entscheidung über den Einspruch: **29.06.2022**
(45) Hinweis auf die Patenterteilung: 22.10.2014
(21) Anmeldenummer: 13172603.6
(22) Anmeldetag: 19.06.2013
(51) Int. Cl.: B60K 17/02, F16H 41/24

(54) **Lagerungssystem für ein Antriebssystem**
Bearing system for a drive system
Système de logement pour un système d'entraînement

(30) Priorität: 10.07.2012 DE 102012212000
(43) Veröffentlichungstag der Anmeldung: 15.01.2014
(73) Patentinhaber: Schaeffler Technologies AG & Co. KG, 91074 Herzogenaurach (DE)
(72) Erfinder: Maienschein, Stephan, 76534 Baden-Baden (DE); Krause, Thorsten, 77815 Bühl (DE)
(74) Vertreter: DTS Patent- und Rechtsanwälte Schnekenbühl und Partner mbB

(56) Entgegenhaltungen:
- WO-A1-2011/074662
- DE-A1- 4 036 270
- DE-A1-102006 034 945
- DE-A1-102009 038 198
- DE-A1-102009 040 367
- DE-T5-112009 001 468
- FR-A1- 2 807 799
- US-A- 5 267 488
- US-B1- 6 408 718
- US-B2- 7 509 802

## Beschreibung

Die Erfindung betrifft ein Lagerungssystem für ein Antriebssystem, insbesondere für ein Kraftfahrzeug mit einer Verbrennungskraftmaschine, einer Reibkupplung und einem Schaltgetriebe.

Ein Drehmomentwandler ist zwischen einer Antriebseinheit, die ein Drehmoment erzeugt, und einem angetriebenen System zwischengeschaltet. Die Antriebseinheit ist beispielsweise eine Verbrennungskraftmaschine oder ein Elektromotor. Der Drehmomentwandler hat dabei die Aufgabe, das von der Antriebseinheit erzeugte Drehmoment gewandelt auf das angetriebene System zu übertragen. Das bedeutet insbesondere, dass der Drehmomentwandler dazu eingerichtet sein kann, während der gesamten Abgabe eines Drehmoments durch die Antriebseinheit dieses Drehmoment dem angetriebenen System zuzuschalten oder es davon zu entkoppeln. Auch ist der Drehmomentwandler häufig dazu eingerichtet, die Antriebseinheit von rückwärtig gerichteten Drehmomenten ausgehend von dem angetriebenen System zu entkoppeln. Insbesondere bei Kraftfahrzeugen ist das angetriebene System ein Schaltgetriebe mit einer festen Drehmomentverbindung mit dem Vortrieb des Kraftfahrzeugs. Der Drehmomentwandler kann in diesem Einsatz zum Beispiel eine Anfahrkupplung beziehungsweise eine Reibkupplung umfassen.

Im Stand der Technik (siehe Beispielsweise DE 4036270 A) werden solche Drehmomentwandler über einen Zentrierpilot mit der Abtriebswelle der Antriebseinheit ausgerichtet und gelagert. Die axiale Sicherung und Fixierung der radialen Position wird durch eine Verschraubung des Drehmomentwandlers an einer motorseitigen Flexplatte vorgenommen. Bei einer solchen bekannten Anordnung ist es schwer oder gar nicht möglich, weitere Elemente zwischen der Antriebseinheit und dem Drehmomentwandler anzuordnen. Dies ist nur mit erheblichem Montageaufwand und erhöhtem Bauraum möglich.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale der unabhängigen Patentansprüche gelöst. Vorteilhafte Weiterbildungen sind Gegenstand der abhängigen Patentansprüche.

Die Erfindung betrifft ein Lagerungssystem für ein Antriebssystem, welches zumindest die folgenden Komponenten umfasst:
- eine Abtriebswelle einer Antriebseinheit, wobei die Antriebseinheit eine Verbrennungskraftmaschine ist;
- ein Anschlusssystem mit zumindest einem Anschlusselement für ein Antriebsgehäuse;
- zumindest eine Getriebewelle eines Getriebes;
- ein Getriebegehäuse;
- ein Drehmomentwandler; und
- zumindest zwei Lagerelemente für rotatorische Relativbewegungen,

wobei der Drehmomentwandler mit der zumindest einen Getriebewelle verbunden ist und die zumindest zwei Lagerelemente den Drehmomentwandler gegenüber dem Getriebegehäuse lagern, wobei eins der Lagerelemente auf einer Anschlusswelle angeordnet ist, wobei die Anschlusswelle über eine Flexplatte mit dem Drehmomentwandler rotationsfest verbunden ist,
wobei die Anschlusswelle den Anschluss zur Abtriebswelle umfasst.

Der Drehmomentwandler, zum Beispiel ein Anfahrelement für ein Kraftfahrzeug, weist in der Regel eine Eingangsseite und eine Ausgangsseite für ein Drehmoment auf. Die Eingangsseite ist mit einer Abtriebswelle einer Antriebseinheit verbunden und rotiert mit dieser (nahezu) synchron. Die Ausgangsseite ist mit zumindest einer Getriebewelle eines Getriebes verbunden und kann mit der Eingangsseite des Drehmomentwandlers synchronisiert werden, das heißt zugeschaltet oder entkoppelt werden. Daher ist der Drehmomentwandler ein rotierendes Bauteil, welches durch ein Lagerungssystem gegen die Umgebung rotatorisch gelagert werden muss. Ein solches Lagerungssystem ist zum Beispiel eine rotatorische Lagerung mittels einer Mehrzahl von, mindestens zwei, Wälzlagern, die zum Beispiel als Fest-Loslagerung eingerichtet sind. Bevorzugt stellt dabei das zumindest eine Lagerelement, welches eingangsseitig angeordnet ist, die Festlagerung dar.

Zur axialen Sicherung und Fixierung der radialen Position des Drehmomentwandlers ist ein Anschlusssystem vorgesehen, welches zumindest ein Anschlusselement für ein Antriebsgehäuse aufweist. Ein solches Anschlusssystem ist üblicherweise eine lösbare Verbindung, wie zum Beispiel eine Verschraubung, kann gegebenenfalls aber auch eine nicht lösbare Verbindung, wie zum Beispiel geschweißt, sein. In ersterem Fall stellt das Anschlusselement zum Beispiel eine Schraube und im zweiten Fall eine Schweißnaht dar.

Weiterhin umfasst das Lagerungssystem ein Getriebegehäuse, welches die Getriebewelle eines angeschlossenen Getriebes umgibt. Dieses Getriebegehäuse ist in der Regel starr und bildet zum Beispiel durch eine Anbindung am Fahrzeugchassis ein Gegenlager für das übertragene Drehmoment. Die Abtriebswelle einer Antriebseinheit, welche eingangsseitig mit dem Drehmomentwandler verbunden ist, gibt ein Drehmoment ab. Hierbei ist darauf hinzuweisen, dass die Abtriebswelle nicht unmittelbar mit der Eingangsseite des Drehmomentwandlers verbunden sein muss. Das angeschlossene Getriebe weist in der Regel eine oder zwei Getriebewellen auf, welche jeweils zuschaltbar ist und somit das Drehmoment der Antriebseinheit auf das angetriebene System überträgt, zum Beispiel auf die Räder eines Kraftfahrzeugs.

Durch das Anordnen der zumindest zwei Lagerelemente zwischen dem Drehmomentwandler und dem Getriebegehäuse können die Abtriebswelle und der Drehmomentwandler in einfacher Weise zueinander zentriert werden. Hierzu kann zum Beispiel der Drehmomentwandler mit der Getriebewelle und dem Getriebegehäuse vormontiert werden und in einem Einbau zum Beispiel über einen wieder entfernbaren Zentrierpilot der Antriebswelle der anzuschließenden Antriebseinheit justiert werden und anschließend über das Getriebegehäuse axial gesichert und in seiner radialen Position fixiert werden. Bei einer solchen Anordnung können ohne weiteren größeren Aufwand verschiedene Elemente zwischen der Abtriebswelle und dem Drehmomentwandler angeordnet werden. Ein solches Element kann zum Beispiel über eine Verzahnung an der Eingangsseite des Drehmomentwandlers in eine korrespondierende Verzahnung eingeschoben werden. Insbesondere können bei dieser Anordnung der beschriebene eingangsseitige Lagersitz und die Drehmomentmitnahme in einem Bauteil realisiert werden.

In einer weiteren vorteilhaften Ausführungsform des Lagerungssystems ist zwischen der Abtriebswelle und dem Drehmomentwandler ein Dämpfer zwischengeschaltet, sodass der Drehmomentwandler und die Abtriebswelle schwingungsentkoppelt verbunden sind.

Wie bereits im Vorfeld beschrieben, ist es im Stand der Technik eine bisher ungelöste Aufgabe, ein Element zwischen der Abtriebswelle und dem Drehmomentwandler in der Art anzuordnen, dass der Montageaufwand gering bleibt. Mit dem hier vorgeschlagenen Lagerungssystem können Zwischenelemente wie zum Beispiel der Dämpfer an der Abtriebswelle der anzuschließenden Antriebseinheit fixiert werden und anschließend das Getriebegehäuse mit dem Antriebsgehäuse über das Anschlusssystem verbunden werden, wobei zugleich über eine Drehmomentmitnahme, zum Beispiel eine Verzahnung, das Zwischenelement, wie zum Beispiel der Dämpfer, mit dem Drehmomentwandler zentriert verbunden wird.

In einer weiteren vorteilhaften Ausführungsform des Lagerungssystems weist der Drehmomentwandler ein rotierendes Wandlergehäuse auf und zumindest eins der Lagerelemente ist zwischen dem Wandlergehäuse und dem Getriebegehäuse angeordnet.

Der Drehmomentwandler ist vorteilhafterweise mit einem rotierenden beziehungsweise rotierbaren Wandlergehäuse umgeben, welches die Bauteile zum Wandeln des Drehmoments umgibt. Beispielsweise umschließt das Wandlergehäuse einen Nassraum, in sich dem die Bauteile befinden, welche eine Relativbewegung zueinander beschreiben und miteinander in reibender Verbindung stehen, so dass abzuführende Wärme erzeugt wird. Ein solches rotierendes Wandlergehäuse ist ebenfalls zentriert und definiert die Lage der Bauteile im Inneren des Drehmomentwandlers. Daher ist es vorteilhaft, dieses Wandlergehäuse zur Anordnung zumindest eines der Lagerelemente zu verwenden. Insbesondere ist das eingangsseitige Lagerelement zwischen dem Getriebegehäuse und dem Wandlergehäuse angeordnet.

In einer weiteren vorteilhaften Ausführungsform des Lagerungssystems sind das Getriebegehäuse und das Anschlusssystem des Antriebsgehäuses rotationsfest miteinander fixiert, wobei die mindestens eine Getriebewelle und die Abtriebswelle über das Anschlusssystem miteinander zentriert sind.

Durch das rotationsfeste Fixieren des Getriebegehäuses und des Antriebsgehäuses miteinander kann zum einen ein gutes Drehmomentwiderlager gebildet werden, zum anderen ist aber auch eine vereinfachte Montage möglich. Insbesondere wird die Montage dadurch erleichtert, dass mit dieser Fixierung die Getriebewelle und die Abtriebswelle allein über das Anschlusssystem miteinander zentrierbar sind. Es kann aber auch eine zwischenzeitliche Montagezentrierung vorgenommen werden, welche allein über das Anschlusssystem fixiert wird, woraufhin die zwischenzeitliche Montagezentrierung wieder entfernt wird. In jedem Fall wird ein zusätzliches Gehäuse für Zwischenelemente, wie zum Beispiel einen Dämpfer, überflüssig.

Es ist zumindest eins der Lagerelemente auf einer Anschlusswelle angeordnet, wobei die Anschlusswelle über eine Flexplatte mit dem Drehmomentwandler rotationsfest verbunden ist.

Die Anschlusswelle umfasst den Anschluss zur Abtriebswelle beziehungsweise zu einem zwischengeschalteten Zwischenelement, wie zum Beispiel ein Dämpfer, und weiterhin eines der Lagerelemente. Im Weiteren ist die Anschlusswelle nicht baueinheitlich mit dem Drehmomentwandler ausgebildet, sondern allein über eine Flexplatte mit diesem verbunden. Hierüber findet eine weitere (axiale) Entkopplung der Abtriebswelle von dem Drehmomentwandler beziehungsweise der Getriebewelle statt, ohne dass eine weitere Zentrierungsmaßnahme während der Montage des Getriebes mit der Antriebseinheit stattfinden muss.

Lagerungssystem nach einem der vorhergehenden Ansprüche, wobei zumindest eins der Lagerelemente auf einer Anschlusswelle angeordnet ist, wobei die Anschlusswelle eine Zentrieraufnahme für die mindestens eine Getriebewelle aufweist.

Die Anschlusswelle ermöglicht eine Trennung der radialen und axialen Ausrichtung des Drehmomentwandlers zur Abtriebswelle und/oder der zumindest einen Getriebewelle zum Drehmomentwandler. Die Abtriebswelle kann nämlich derart eingerichtet sein, dass an ihr längliche Aufnahmen für einen Drehmomentanschluss an die Abtriebswelle, zum Beispiel mittels einer Verzahnung, und/oder an die zumindest eine Getriebewelle, zum Beispiel mittels einer hydrodynamischen Lagerung, gebildet werden. Dadurch ist die axiale Position relativ frei einstellbar. Gleichzeitig kann die Anschlusswelle sehr exakt radial ausgerichtet werden und damit zur Zentrierung des Drehmomentwandlers und/oder der zumindest einen Getriebewelle verwendet werden.

Bei allen hier vorgeschlagenen Ausführungsformen ist insbesondere der Vorteil gegeben, dass das Lagerungssystem allein zwischen dem Drehmomentwandler und dem Getriebegehäuse angeordnet ist. Dadurch ist die Gefahr einer Lagerklemmung durch eine Fehlmontage oder einer unvorhergesehenen Verschiebung zwischen dem Getriebegehäuse und dem Antriebsgehäuse sicher vermieden.

Gemäß einem weiteren Aspekt der Erfindung wird auch ein Kraftfahrzeug mit einem Antriebssystem aufweisend eine Antriebseinheit, ein Getriebe und ein Lagerungssystem vorgeschlagen, wobei zumindest eins der Lagerelemente auf einer Anschlusswelle angeordnet ist, wobei die Anschlusswelle die zumindest eine Getriebewelle zentriert.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, einen Drehmomentwandler derart einzusetzen, dass die gesamte Anordnung eine geringe Baugröße aufweist.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Das oben beschriebene Lagerungssystem ist für den Einsatz in Kleinfahrzeugen besonders geeignet, weil hierdurch bauraumintensive Lagerungen und Zwischenelemente eingespart werden können. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: ein Lagerungssystem mit einteiligem Wandlergehäuse,
- Fig. 2:: ein Lagerungssystem mit Anschlusswelle und Flexplatte,
- Fig. 3:: eine Anschlusswelle mit Lagersitz,
- Fig. 4:: eine Anschlusswelle mit Lagersitz am Wandlergehäuse,
- Fig. 5:: eine Anschlusswelle mit Lagersitz und Zentrieraufnahme,
- Fig. 6:: eine Anschlusswelle mit Lagersitz und alternativer Anbindung an das Wandlergehäuse,
- Fig. 7:: eine Anschlusswelle mit Zentrieraufnahme und Lagersitz an dem Wandlergehäuse, und
- Fig. 8:: ein Kraftfahrzeug mit Antriebssystem.

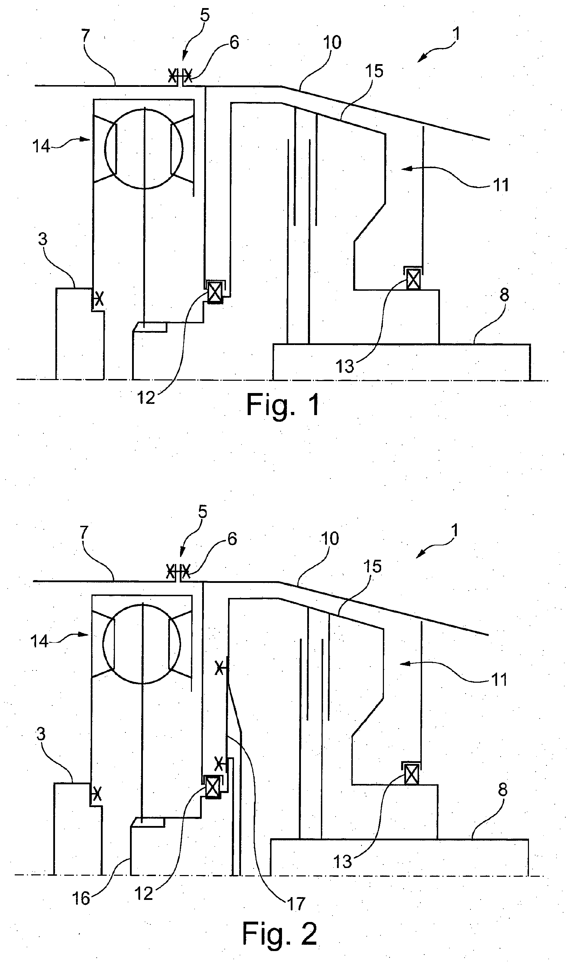

In Fig. 1 wird schematisch ein Lagerungssystem 1 gezeigt, in welchem zentral ein Drehmomentwandler 11 mit einem Wandlergehäuse 15 angeordnet ist. Links in der Darstellung ist schematisch eine Abtriebswelle 3 gezeigt, welche über einen Dämpfer 14 mit dem Drehmomentwandler 11 verbunden ist. Das Wandlergehäuse 15 ist über ein erstes Lagerelement 12 und ein zweites Lagerelement 13 mit dem Getriebegehäuse 10 rotatorisch bewegbar verbunden. In diesem Beispiel bildet das erste Lagerelement 12 ein Festlager und das zweite Lagerelement 13 ein Loslager. Das Getriebegehäuse 10 ist über ein Anschlusssystem 5 mit einem schematisch dargestellten lösbaren Anschlusselement 6 an dem Antriebsgehäuse 7 angebracht. In dem Drehmomentwandler 11 ist eine Getriebewelle 8 angeordnet.

In Fig. 2 ist eine ähnliche Anordnung wie in Fig. 1 gezeigt, wobei hier eine Anschlusswelle 16 vorgesehen ist, welche über eine Flexplatte 17 mit dem Wandlergehäuse 15 verbunden ist. In diesem Beispiel ist das erste Lagerelement 12 auf der Anschlusswelle 16 angebracht.

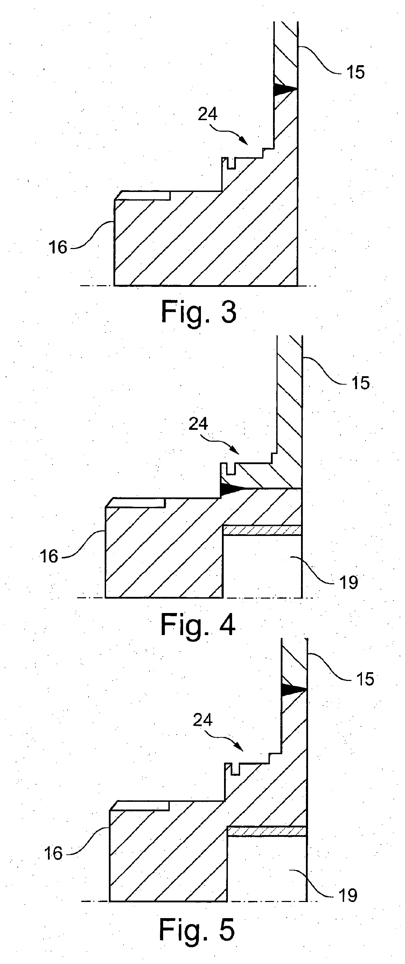

In Fig. 3 ist eine Anschlusswelle 16 gezeigt, wobei hier der Lagersitz 24 für das erste Lagerelement 12 (nicht dargestellt) auf der Anschlusswelle 16 gebildet ist und das Wandlergehäuse 15 über eine Schweißnaht mit der Anschlusswelle 16 verbunden ist.

In Fig. 4 ist eine Anschlusswelle 16 gezeigt, wobei hier der Lagersitz 24 von dem angeschweißten Wandlergehäuse 15 gebildet wird. Weiterhin bildet die Anschlusswelle 16 eine Zentrieraufnahme 19 für die Getriebewelle 8 (nicht dargestellt).

Fig. 5 zeigt ausschnittsweise eine Anschlusswelle 16, welche den Lagersitz 24 selbst bildet und ebenfalls eine Zentrieraufnahme 19 bildet.

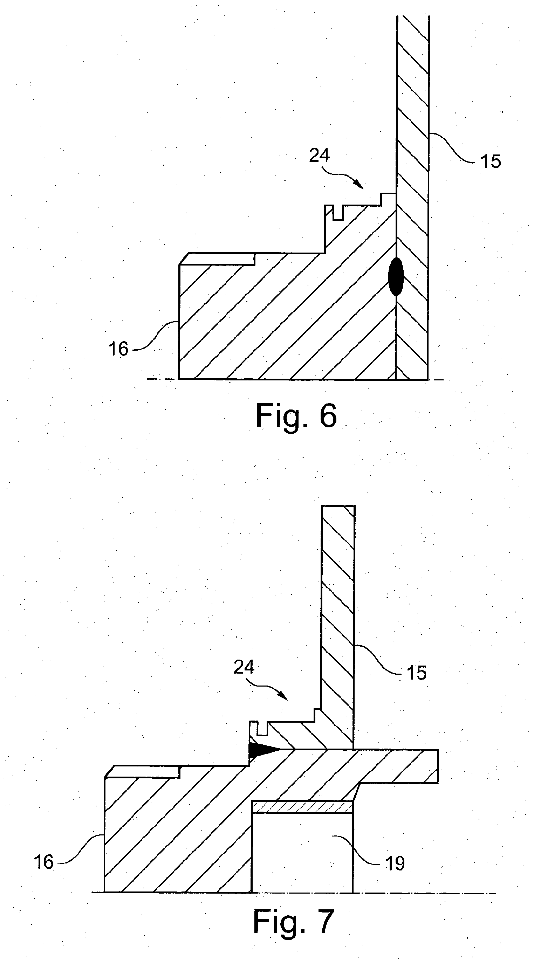

Fig. 6 zeigt ein weiteres Beispiel der Anschlusswelle 16, wobei der Lagersitz 24 wiederum durch die Anschlusswelle 16 gebildet wird und auf das Wandlergehäuse aufgeschweißt ist.

Fig. 7 zeigt ein weiteres Beispiel einer Anschlusswelle 16, wobei der Lagersitz 24 durch das angeschweißte Wandlergehäuse 15 gebildet wird und weiterhin die Anschlusswelle 16 eine Zentrieraufnahme 19 für zwei (nicht dargestellte) Getriebewellen 8 aufweist.

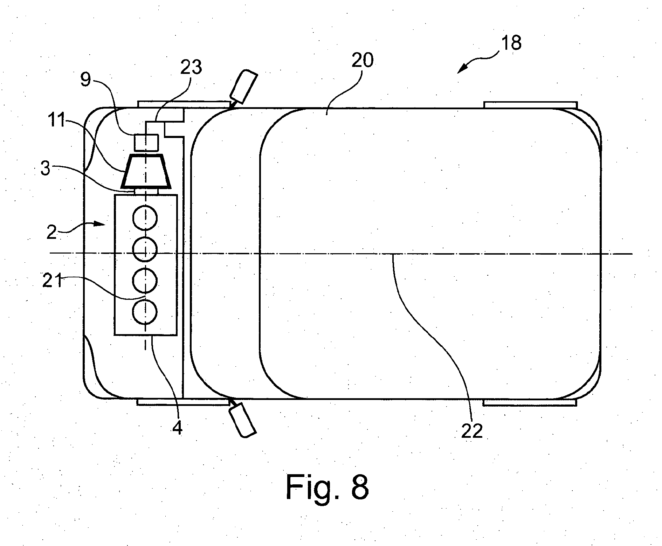

Fig. 8 zeigt ein Kraftfahrzeug 18, in welchem ein Antriebssystem 2 vor der Fahrerkabine 20 angeordnet ist. Hierin ist eine Antriebseinheit 4 mit der Motorachse 21 quer zur Längsachse 22 des Kraftfahrzeugs 18 angeordnet. Die Abtriebswelle 3 der Antriebseinheit 4 ist über einen Drehmomentwandler 11 mit einem Getriebe 9 und darüber mit einem Vortrieb 23 verbunden.

Mit der vorliegenden Erfindung ist es möglich, einen Drehmomentwandler mit einfachen Mitteln zu einer Abtriebswelle zu zentrieren und ohne Nachteile gegenüber dem notwendigen Bauraum Zwischenelemente zwischen dem Drehmomentwandler und der Abtriebswelle anzuordnen.

### Bezugszeichenliste

- 1: Lagerungssystem
- 2: Antriebssystem
- 3: Abtriebswelle
- 4: Antriebseinheit
- 5: Anschlusssystem
- 6: Anschlusselement
- 7: Antriebsgehäuse
- 8: Getriebewelle
- 9: Getriebe
- 10: Getriebegehäuse
- 11: Drehmomentwandler
- 12: erstes Lagerelement
- 13: zweites Lagerelement
- 14: Dämpfer
- 15: Wandlergehäuse
- 16: Anschlusswelle
- 17: Flexplatte
- 18: Kraftfahrzeug
- 19: Zentrieraufnahme
- 20: Fahrerkabine
- 21: Motorachse
- 22: Längsachse
- 23: Vortriebssystem
- 24: Lagersitz

## Patentansprüche

1. Lagerungssystem (1) für ein Antriebssystem (2), umfassend zumindest:
- eine Abtriebswelle (3) einer Antriebseinheit (4), wobei die Antriebseinheit (4) eine Verbrennungskraftmaschine ist;
- ein Anschlusssystem (5) mit zumindest einem Anschlusselement (6) für ein Antriebsgehäuse (7);
- zumindest eine Getriebewelle (8) eines Getriebes (9);
- ein Getriebegehäuse (10);
- ein Drehmomentwandler (11); und
- zumindest zwei Lagerelemente (12,13) für rotatorische Relativbewegungen,
wobei der Drehmomentwandler (11) mit der zumindest einen Getriebewelle (8) verbunden ist und die zumindest zwei Lagerelemente (12,13) den Drehmomentwandler (11) gegenüber dem Getriebegehäuse (10) lagern, wobei eins der Lagerelemente (12) auf einer Anschlusswelle (16) angeordnet ist,
wobei die Anschlusswelle (16) über eine Flexplatte (17) mit dem Drehmomentwandler (11) rotationsfest verbunden ist, wobei die Anschlusswelie (16) den Anschluss zur Abtriebswelle (3) umfasst.

2. Lagerungssystem (1) nach Anspruch 1, wobei zwischen der Abtriebswelle (3) und dem Drehmomentwandler (11) ein Dämpfer (14) zwischengeschaltet ist, sodass der Drehmomentwandler (11) und die Abtriebswelle (3) schwingungsentkoppelt verbunden sind.

3. Lagerungssystem (1) nach Anspruch 1 oder 2, wobei der Drehmomentwandler (11) ein rotierendes Wandlergehäuse (15) aufweist und zumindest eins der Lagerelemente (12,13) zwischen dem Wandlergehäuse (15) und dem Getriebegehäuse (10) angeordnet ist.

4. Lagerungssystem (1) nach einem der vorhergehenden Ansprüche, wobei das Getriebegehäuse (10) und das Anschlusssystem (5) des Antriebsgehäuses (7) rotationsfest miteinander fixiert sind, wobei die mindestens eine Getriebewelle (8) und die Abtriebswelle (3) über das Anschlusssystem (5) miteinander zentriert sind.

5. Lagerungssystem (1) nach einem der vorhergehenden Ansprüche, wobei zumindest eins der Lagerelemente (12) auf einer Anschlusswelle (16) angeordnet ist, wobei die Anschlusswelle (16) eine Zentrieraufnahme (19) für die mindestens eine Getriebewelle (8) aufweist.

## Claims

1. Bearing system (1) for a drive system (2), comprising at least:
- an output shaft (3) of a drive unit (4), wherein the drive unit (4) is an internal combustion engine;
- a connector system (5) with at least one connector element (6) for a drive housing (7);
- at least one transmission shaft (8) of a transmission (9);
- a transmission housing (10);
- a torque converter (11); and
- at least two bearing elements (12, 13) for rotatory relative movements,
wherein the torque converter (11) is connected to the at least one transmission shaft (8) and the at least two bearing elements (12, 13) mount the torque converter (11) with respect to the transmission housing (10),
wherein one of the bearing elements (12) is arranged on a connector shaft (16), wherein the connector shaft (16) is connected to the torque converter (11) in a rotationally fixed manner via a flexplate (17), wherein the connector shaft (16) comprises the connection to the output shaft (3).

2. Bearing system (1) according to claim 1, wherein a damper (14) is connected between the output shaft (3) and the torque converter (11), with the result that the torque converter (11) and the output shaft (3) are connected in a vibration-decoupled manner.

3. Bearing system (1) according to claim 1 or 2, wherein the torque converter (11) has a rotating converter housing (15), and at least one of the bearing elements (12, 13) is arranged between the converter housing (15) and the transmission housing (10).

4. Bearing system (1) according to one of the preceding claims, wherein the transmission housing (10) and the connector system (5) of the drive housing (7) are fixed to one another in a rotationally fixed manner, wherein the at least one transmission shaft (8) and the output shaft (3) are centred with respect to one another via the connector system (5).

5. Bearing system (1) according to one of the preceding claims, wherein at least one of the bearing elements (12) is arranged on a connector shaft (16), wherein the connector shaft (16) has a centring socket (19) for the at least one transmission shaft (8).

## Revendications

1. Système de logement (1) pour un système d'entraînement (2), comprenant au moins :
- un arbre d'entraînement en sortie (3) d'une unité d'entraînement (4), l'unité d'entraînement (4) comprenant un moteur à combustion interne ;
- un système de raccordement (5) avec au moins un élément de raccordement (6) pour un carter d'entraînement (7) ;
- au moins un arbre de boîte de vitesses (8) d'une boîte de vitesses (9) ;
- un carter de boîte de vitesses (10) ;
- un convertisseur de couple (11) ; et
- au moins deux éléments de palier (12, 13) pour des mouvements relatifs de rotation, le convertisseur de couple (11) étant relié à au moins un arbre de boîte de vitesses (8) et les au moins deux éléments de palier (12, 13) logeant le convertisseur de couple (11) par rapport au carter de boîte de vitesses (10), un des éléments de palier (12) étant disposé sur un arbre de raccordement (18), l'arbre de raccordement (16) étant relié fixement en rotation au convertisseur de couple (11) via une plaque flexible (17), l'arbre de raccordement (18) comprenant le raccordement à l'arbre d'entraînement en sortie (3).

2. Système de logement (1) selon la revendication 1, un amortisseur (14) étant interconnecté entre l'arbre d'entraînement en sortie (3) et le convertisseur de couple (11), de sorte que le convertisseur de couple (11) et l'arbre d'entraînement en sortie (3) soient reliés de façon découplée en oscillation.

3. Système de logement (1) selon la revendication 1 ou 2, le convertisseur de couple (11) comportant un carter de convertisseur (15) tournant et au moins un des éléments de palier (12, 13) étant disposé entre le carter de convertisseur (15) et le carter de boîte de vitesses (10).

4. Système de logement (1) selon l'une quelconque des revendications précédentes, le carter de boîte de vitesses (10) et le système de raccordement (5) du carter d'entraînement (7) étant fixés fixement en rotation l'un avec l'autre, l'au moins un arbre de boîte de vitesses (8) et l'arbre d'entraînement en sortie (3) étant centrés entre eux via le système de raccordement (5).

5. Système de logement (1) selon l'une quelconque des revendications précédentes, au moins un des éléments de palier (12) étant disposé sur un arbre de raccordement (18), l'arbre de raccordement (16) comportant un logement centreur (19) pour l'au moins un arbre de boîte de vitesses (8) .
